Europäisches Patentamt

**European Patent Office**

Office européen des brevets

(11) Numéro de publication: **0 005 675**
**B1**

(12) **FASCICULE DE BREVET EUROPEEN**

(45) Date de publication du fascicule du brevet: **06.10.82**

(51) Int. Cl.³: **B 60 T 11/34, F 16 D 65/24**

(21) Numéro de dépôt: **79400315.2**

(22) Date de dépôt: **18.05.79**

(54) **Cylindre de roue.**

(30) Priorité: **19.05.78 FR 7814943**

(43) Date de publication de la demande:
**28.11.79 Bulletin 79/24**

(45) Mention de la délivrance du brevet:
**06.10.82 Bulletin 82/40**

(84) Etats contractants désignés:
**DE GB IT**

(56) Documents cités:
**FR - A - 1 488 395**
**FR - A - 2 219 862**

(73) Titulaire: **SOCIETE ANONYME D.B.A.**
**98 boulevard Victor Hugo**
**F-92115 Clichy (FR)**

(72) Inventeur: **Levrai, Roland**
**9 bis Avenue Monmousseau**
**F-93240 Stains (FR)**
Inventeur: **Riquart, Christian**
**33 rue Fessart**
**F-75019 Paris (FR)**

(74) Mandataire: **Brullé, Jean et al,**
**Service Brevets Bendix 44, rue François 1er**
**F-75008 Paris (FR)**

Courier Press, Leamington Spa, England.

## Cylindre de roue

La présente invention est relative à un cylindre de roue.

Dans les systèmes de freinage de véhicule, il est usuel de contrôler la pression de fluide qui règne dans les moteurs de frein associés aux roues arrière du véhicule par l'intermédiare de valves correctrices de freinage, interposées entre la source de pression de fluide et lesdits moteurs de frein.

En conséquence, il est nécessaire de prévoir l'utilisation de deux tuyauteries reliant respectivement la source de fluide sous pression à l'orifice d'entrée de la valve correctrice et l'orifice de sortie de cette valve au moteur de frein associé. Une telle structure a pour inconvénient de nécessiter plusieurs connexions hydrauliques respectivement entre la source de pression et la valve correctrice, et entre cette dernière et le moteur de frein, ce qui augmente les risques de rupture par rapport à un système de freinage sans valve correctrice, et complique le montage.

En outre, dans les systèmes de freinage équipés de manière classique d'une valve de correction reliée au moteur de frein correspondant par un flexible, l'absorption à considérer est celle des freins et du flexible, ce qui a pour effet de retarder les effets de la valve de correction.

D'autre part, lors des opérations de purge du système de freinage équipé de manière classique d'une valve de correction, des bulles d'air peuvent rester bloquées dans la valve lors de la purge du moteur de frein, ce qui aurait pour inconvénient de provoquer un allongement de la course de la pédale, au cours de la mise en oeuvre ultérieure des freins. En conséquence, pour tenter de remédier à ce défaut il est nécessaire d'orienter la valve selon une certain direction inclinée au moment du montage sur le véhicule.

Enfin, on remarquera que, par temps froid, le liquide s'écoulant dans la valve de correction disposée sous la caisse du véhicule est relativement visqueux, ce qui ralentit l'écoulement de fluide au détriment du temps de réponse du système de freinage, et ceci sans possibilité de réchauffage du liquide au cours de la mise en oeuvre des freins.

On connaît du brevet FR 2 219 862, notamment en sa figure 3, un cylindre de frein à disque auquel est juxtaposée une soupape retardatrice de pression dont le rôle, spécifique à la mise en oeuvre de freins à disque, est de retarder la mise en pression du cylindre de frein par rapport à la mise en pression du maître cylindre. Quoique cet arrangement permette de pallier certains inconvénients ci-dessus évoqués, il ne peut constituer un enseignement utilisable dans le cadre de freins à tambour dans la mesure où la correction de pression recherchée est essentiellement différente de celle qui prévaut dans le cadre de freins à disque.

Par rapport à ce document, l'originalité de la présente invention est de proposer un cylindre de roue, utilisable spécifiquement pour la mise en oeuvre de freins à tambour, qui permette de remédier aux inconvénients évoqués ci-avant, et en particulier de permettre une correction de la pression de freinage tout en améliorant le temps de réponse du système de freinage.

A cet effet, l'invention propose un cylindre de roue comportant un corps à l'intérieur duquel est défini un alésage, avec au moins un piston d'actionnement monté coulissant dans l'alésage à l'une de ses extrémités et délimitant avec ce dernier une chambre de pression, ledit piston d'actionnement étant susceptible d'être commandé en déplacement vers l'extérieur de l'alésage pour solliciter une première mâchoire de frein à tambour, ledit cylindre comportant un passage d'alimentation destiné à fournir à ladite chambre de pression du fluide sous pression en provenance d'une source de pression de fluide, une valve destinée à moduler la pression dans la chambre de pression en fonction de la pression provenant de la source de pression étant intégrée dans le cylindre de roue, caractérisé en ce que le passage d'alimentation comporte une portion constituée par une gorge annulaire du piston d'actionnement susceptible de recevoir du fluide sous pression en provenance de la source de pression, un alésage axial borgne défini dans le piston d'actionnement, ledit alésage axial étant en communication avec ladite gorge annulair et s'ouvrant vers la chambre de pression, ladite valve étant du type à piston différentiel et disposée dans l'alésage borgne du piston d'actionnement, la valve occupant, pour une pression d'entrée inférieure à une valeur prédéterminée, une position d'ouverture permettant un accroissement de pression dans la chambre de pression égal à l'accroissement de la pression d'entrée, puis, pour une pression d'entrée supérieure à cette valeur prédéterminée, la valve subissant une succession d'ouvertures et de fermetures ne permettant qu'un accroissement de pression dans la chambre de pression inférieur à l'accroissement de la pression d'entrée, dans le rapport des surfaces efficaces dudit piston différentiel.

L'invention est maintenant décrite, et d'autres avantages apparaîtront à la lecture de la description qui va suivre et qui se réfère aux figures des dessins annexés, dans lesquels:

— la figure 1 représente un mode de réalisation préférentiel du cylindre de roue selon l'invention;
— la figure 2 représente une variante du cylindre de roue représenté à la figure 1.

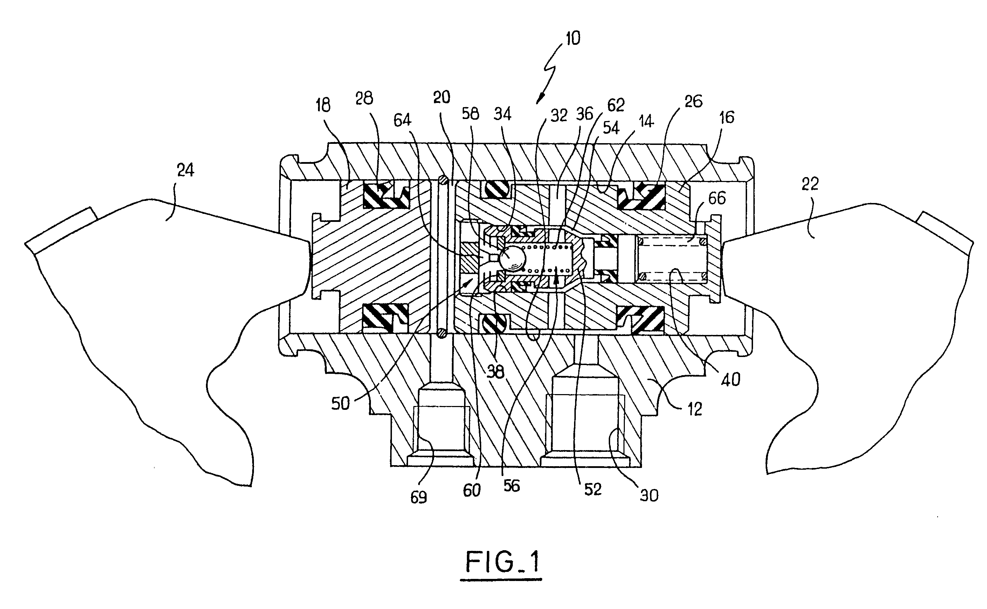

Si on se réfère à la figure 1 des dessins, on a représenté de façon générale par la référence numérique 10 un cylindre de roue comportant un corps 12 à l'intérieur duquel est défini un alésage 14. Un premier piston d'actionnement 16 et un deuxième piston d'actionnement 18 sont montés de façon coulissante dans l'alésage 14 entre lesquels est définie une chambre de pression 20. Les pistons 16 et 18 sont respectivement destinés à appliquer une force à des mâchoires 22 et 24 (partiellement représentés) d'un frein à tambour sous l'influence de la pression qui règne dans la chambre de pression 20. Chaque piston 6, 18 est équipé d'un joint annulaire 26, 28 qui coopère avec l'alésage 14 pour assurer l'étanchéité de la chambre 20. Celle-ci est alimentée en fluide sous pression provenant d'une source de pression (non représentée) par l'intermédiaire d'un passage d'alimentation ayant une première portion constituée par un orifice d'entrée 30 défini dans le corps 12 et débouchant dans la paroi cylindrique de l'alésage 14 et par une deuxième portion définie dans le piston 16 et qui est constituée par une gorge annulaire 32, un alésage axial borgne 34 qui débouche dans la chambre 20 et un passage radial de liaison 36. Pour toute position axiale du piston 16, la gorge annulaire est prévue pour être en communication avec l'orifice d'entrée 30 lui-même relié à la source de fluide sous pression. L'alésage borgne 34 est un alésage à gradins dont le fond définit une portion de petit diamètre 40, et dont l'extrémité ouverte définit un portion de grand diamètre 38. Une valve correctrice de freinage désignée de façon générale par la référence numérique 50, est disposée dans l'alésage 34. La valve correctrice de freinage est ici constituée par une compensateur de freinage fixe dont les caractéristiques essentielles sont connues du compensateur de freinage décrit dans la demande de brevet français publiée sous le numéro 2 248 182, à l'exception du fait que le compensatuer intégré dans le cylindre de roue n'est pas asservi à la charge mais est un compensateur fixe. La valve 50 comporte un piston différentiel 52 monté coulissant de façon étanche dans l'alésage à gradins 34 du piston 16. La portion de grande section du piston différentiel 52 coulisse dans la portion de grand diamètre 38 de l'alésage et son extrémité de grande surface efficace est adjacente à la chambre de pression 20. La portion de petite section efficace du piston différentiel 52 est soumise à la pression qui règne dans une chambre annulaire 54 en communication avec le passage radial 36, c'est-à-dire avec la pression d'alimentation. Un passage 56 traverse le piston différentiel 52 et comporte une portion radiale et une portion axiale qui relient la chambre annulaire 54 à la chambre de pression 20. Dans ce passage, une soupape à bille 58 est sollicitée par un faible ressort 62 vers un siège de soupape 60 monté sur le piston différentiel 52. Le piston d'actionnement 16 comporte une butée fixe 64 et le piston 52 est normalement sollicité vers la gauche (si on considère la figure 1) sous l'action d'un ressort 66 qui prend appui contre le fond de l'alésage borgne 34, pour que la butée 64 soulève la soupape 58 en écartement de son siège 60. Dans la position illustrée sur la figure 1, on a représenté le piston différentiel 52 de telle sorte que la soupape 58 occupe une position limite de fermeture.

Le corps 12 du cylindre de roue 10 comporte également un deuxième orifice 69 qui débouche dans la chambre de pression 20 et qui est destiné à effectuer la purge simultanée du cylindre de roue et de la valve correctrice de freinage.

Le cylindre de roue qui vient d'être décrit fonctionne de la manière suivante: dans une première phase de freinage la soupape occupe sa position d'ouverture et la chambre de pression 20 reçoit une pression de fluide non limitée, en provenance de la source de pression (non représentée). Dans une deuxième phase pour laquelle la pression a dépassé une valeur limite prédéterminée, la valve correctrice entre en action, et le taux d'augmentation de pression dans la chambre 20 est alors réduit de manière classique dans le rapport des surfaces efficaces du piston différentiel, ce qui se traduit par une succession d'ouvertures et de fermetures de la soupape au cours de l'augmentation de la pression d'entrée.

Dans un système de freinage dont les freins des roues arrière sont équipés chacuns avec un cylindre de roue selon l'invention, il est à noter qu'en cas de défaillance d'une des valves de correction associée avec l'un des cylindres de roue, la stabilité latérale du véhicule reste cependant assurée par la mise en oeuvre de la valve de correction du cylindre de roue intact.

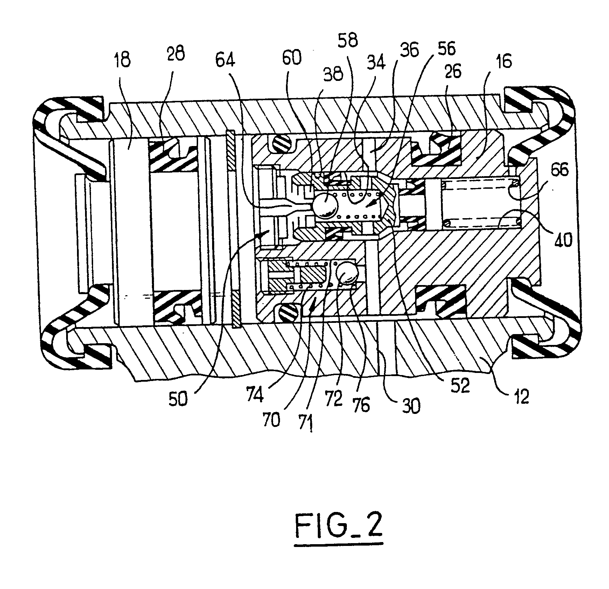

Si on se réfère à la figure 2, on a représenté une variante de cylindre de roue pratiquement identique au cylindre de roue représenté sur la figure 1 et les éléments identiques à ceux de la figure 1 seront représentés par les mêmes références numériques. Le cylindre de roue représenté sur la figure 2 comporte de plus un clapet de décharge 70 monté dans un passage axial 71 du piston 16 qui relie le passage radial 36 à la chambre 20. Le clapet 70 comporte une bille 72 sollicitée à l'encontre de la pression qui règne dans le passage radial 36 par un ressort 74 pour venir en appui contre un siège 76. Dans un premier temps, le cylindre de roue de la figure 2 fonctionne de manière identique à celui de la figure 1, c'est-à-dire que la pression croît d'abord de manière non limitée. Par la suite la loi de montée en pression dans la chambre 20 est restreinte par l'action du compensateur. Lorsque la différence des pressions régnant dans le passage 36 et dans la chambre 20, atteint une valeur prédéterminée suffisante pour soulever la bille 72 en écartement de son siège à l'encontre du ressort 74, toute augmentation supplémentaire de la pression dans le passage 36, est transmise intégralement à la chambre de pression 20, de telle sorte que la montée en pression est de nouveau normale. Ainsi, pour les hautes pressions en provenance de la source de pression, le clapet 70 permet d'assurer une plus grande efficacité de freinage du véhicule par rapport à celle obtenue par la mise en oeuvre d'un cylindre de roue équipé d'un correcteur, tel que représenté sur la figure 1.

On remarquera que les cylindres de roue dont la structure et le fonctionnement viennent d'être décrits présentent les avantages suivants: la communication de fluide entre la source de pression de fluide et le cylindre de roue est assurée par une tuyauterie unique, identique à celle qui est utilisée dans un système de freinage comportant des freins à tambour et sans valve correctrice de freinage. En conséquence, il n'est pas nécessaire de modifier le tuyautage hydraulique entre un véhicule équipé de cylindres de roue sans correcteur intégré, et un véhicule équipé de cylindres de roue avec valve correctrice. D'autre part, étant donné que la valve correctrice est intégrée dans le cylindre de roue, les problèmes d'absorption sont largement réduits, et les retards sont minimisés.

De plus, étant donné que dans la structure selon l'invention, la valve correctrice est située au voisinage des mâchoires de frein à tambour, c'est-à-dire également au voisinage des surfaces de friction, la chaleur ainsi engendrée au cours des premières applications de frein diminuera la viscosité du fluide dans la valve de correction, ce qui a pour avantage de diminueur les temps de réponse, en particulier par temps froid.

D'autre part, comme il a déjà été mentionné, le système selon l'invention permet d'effectuer simultanément la purge de la valve correctrice et du cylindre de roue.

En outre, la valve de correction ainsi disposée dans le cylindre de roue est protégée contre les poussières et les impuretés, ce qui augmente encore la fiabilité du dispositif.

Bien que les cylindres de roue qui viennent d'être décrits comportent deux pistons d'actionnement disposés dans un alésage, il est bien évident que l'invention s'applique également à tout cylindre de roue comportant un alésage borgne avec un piston unique dans lequel est montée la valve correctrice de freinage.

## Revendications

1. Cylindre de roue comportant un corps (12) à l'intérieur du'quel est défini un alésage (14), avec au moins un piston d'actionnement (16) monté coulissant dans l'alésage à l'une de ses extrémités et délimitant avec ce dernier une chambre de pression (20), ledit piston d'actionnement (16) étant susceptible d'être commandé en déplacement vers l'extérieur de l'alésage pour solliciter une première mâchoire (22) de frein à tambour, ledit cylindre comportant un passage d'alimentation (30, 32, 34, 36) destiné à fournir à ladite chambre de pression (20) du fluide sous pression en provenance d'une source de pression de fluide, une valve (50) destinée à moduler la pression dans la chambre de pression (20) en fonction de la pression provenant de la source de pression étant intégrée dans le cylindre de roue, caractérisé en ce que le passage d'alimentation (30, 32, 34, 36) comporte une portion (32, 34, 36) constituée par une gorge annulaire (32) du piston d'actionnement (16) susceptible de recevoir du fluide sous pression en provenance de la source de pression, un alésage axial borgne (34) défini dans le piston d'actionnement, ledit alésage axial (34) étant en communication avec ladite gorge annulaire (32) et s'ouvrant vers la chambre de pression (20), ladite valve (50) étant du type à piston différentiel (52) et disposée dans l'alésage borgne (34) du piston d'actionnement (16), la valve (50) occupant, pour une pression d'entrée inférieure à une valeur prédéterminée, une position d'ouverture permettant un accroissement de pression dans la chambre de pression (20) égal à l'accroissement de la pression d'entrée, puis, pour une pression d'entrée supérieure à cette valeur prédéterminée, la valve (50) subissant une sucession d'ouvertures et de fermetures ne permettant qu'un accroissement de pression dans la chambre de pression (20) inférieur à l'accroissement de la pression d'entrée, dans le rapport des surfaces efficaces dudit piston différentiel (52).

2. Cylindre de roue selon la revendication 1, caractérisé en ce que ladite valve (50) est constituée par un compensateur de freinage.

3. Cylindre de roue selon la revendication 1 ou la revendication 2, caractérisé en ce que la passage d'alimentation (30, 32, 34, 36) comporte un passage (30) défini dans ledit corps (12) et communiquant avec ladite gorge annulaire (32).

4. Cylindre de roue selon l'une quelconque des revendications 1 à 3, caractérisé en ce que l'alésage axial (34) est étagé avec une portion de grand diamètre (38) qui débouche dans la chambre de pression (20), ladite valve (50) comportant un piston différentiel (52) monté dans l'alésage étagé (34) pour séparer ce dernier de la chambre de pression (20), le piston différentiel (52) ayant une face de grande section adjacente à la chambre de pression (20), et une face de petite section soumise à la pression du fluide qui règne à l'orifice d'entrée (30), ledit piston différentiel (52) étant traversé par un passage (56) destiné à mettre en communication l'alésage étagé (34) et la chambre de pression (20), une soupape (58) étant montée dans ce dernier passage (56) et étant élastiquement sollicitée en appui étanche contre un siège (60) prévu sur le piston différentiel (52) et un dispositif élastique de rappel (66) agissant sur le piston différentiel (52) pour déplacer ce dernier vers l'intérieur de la chambre de pression (20) dans une position de repos fixe par rapport au piston (16), position dans laquelle ladite soupape (58) est dégagée de son siège (60) par engagement avec une butée (64).

5. Cylindre de roue selon la revendication 4, caractérisé en ce que ladite butée (64) est fixe par rapport au piston d'actionnement (16).

6. Cylindre de roue selon la revendication 4 ou la revendication 5, caractérisé en ce que le dispositif élastique de rappel (66) est constitué par un ressort prenant appui sur le fond de l'alésage borgne (34).

7. Cylindre de roue selon l'une des revendications 1 à 6, caractérisé en ce que le piston d'actionnement (16) comporte un autre passage (71) destiné à relier la première portion (30) à la chambre de pression (20), un clapet de décharge (70) normalement fermé étant disposé dans ledit autre passage (71) pour autoriser la communication de fluide entre la gorge annulaire (32) et la chambre de pression (20) lorsque la différence des pressions qui règnent dans ladite gorge annulaire (32) et ladite chambre de pression (20) excède une valeur prédéterminée.

8. Cylindre de roue selon l'une quelconque des revendications précédentes, caractérisé en ce qu'il comporte un second piston d'actionnement (18) monté coulissant de façon étanche à l'autre extrémité de l'alésage (14) pour refermer la chambre de pression (20) et pour actionner une seconde mâchoire (24) de frein à tambour.

## Patentansprüche

1. Radzylinder mit einem Körper (12), in dessen Inneren eine Bohrung (14) gebildet ist, wobei mindestens ein Betätigungskolben (16) in der Bohrung an deren einen Ende gleitend gelagert ist und mit ihr eine Druckkammer (20) begrenzt, der Betätigungskolben (16) in Auswärtsrichtung der Bohrung gesteuert verschiebbar ist, um eine erste Bremsbacke (22) eine Trommelbremse zu beaufschlagen, der Zylinder einen Zuführkanal (30, 32, 34, 36) aufweist, der dazu dient, die Druckkammer (20) mit Druckmittel aus einer Druckquelle zu versorgen, und ein im Radzylinder integriertes Ventil (50) das dazu dient, den Druck in der Druckkammer (20) in Abhängigkeit vom Druck der Druckquelle zu modulieren, dadurch gekennzeichnet, daß der Zuführkanal (30, 32, 34, 36) einen Abschnitt (32, 34, 36), der von einer mit Druckmittel der Druckquelle beaufschlagbaren Ringnut (32) des Betätigungskolbens (16) gebildet wird, sowie eine im Betätigungskolben gebildete axiale Sackbohrung (34) aufweist, daß die axiale Sackbohrung (34) mit der Ringnut (32) in Verbindung steht und zur Druckkammer (20) hin offen ist, daß das Ventil (50) ein Ventil mit Differentialkolben (52) ist und in der Sackbohrung (34) des Betätigungskolbens (16) angeordnet ist, wobei das Ventil (50) bei einem Einlaßdruck, der kleiner als ein vorgegebener Wert ist, eine Öffnungsstellung einnimmt, die einen Druckanstieg in der Druckkammer (20) gleich dem Anstieg des Einlaßdruckes zuläßt, und das Ventil (50) bei einem Einlaßdruck, der größer als der vorgegebene Wert ist, eine Folge von Öffnungs- und Schließbewegungen ausführt, was lediglich einen Druckanstieg in der Druckkammer (20) zuläßt, der kleiner ist als der Anstieg des Einlaßdruckes, und zwar im Verhältnis der wirksamen Flächen des Differentialkolbens (52).

2. Radzylinder nach Anspruch 1, dadurch gekennzeichnet, daß das Ventil (50) von einem Bremskompensator gebildet wird.

3. Radzylinder nach Anspruch 1 oder 2, dadurch gekennzeichnet, daß der Zufuhrkanal (30, 32, 34, 36) einen im Körper (12) gebildeten und mit der Ringnut (32) in Verbindung stehenden Kanal (30) aufweist.

4. Radzylinder nach einem der Ansprüche 1 bis 3, dadurch gekennzeichnet, daß die Axialbohrung (34) abgestuft ist, wobei ein Abschnitt großen Durchmessers (38) in die Druckkammer (20) mündet, daß das Ventil (50) einen Differentialkolben (52) aufweist, der in der abgestuften Bohrung (34) gelagert ist, um diese von der Druckkammer (20) zu trennen, daß der Differentialkolben (52) eine an der Druckkammer (20) angrenzende Stirnseite großen Querschnitts und eine dem Druck in der Einlaßöffnung (30) ausgesetzte Stirnseite kleinen Querschnitts aufweist, daß der Differentialkolben (52) von einem Kanal (56) durchquert wird, der dazu dient, die abgestufte Bohrung (34) mit der Druckkammer (20) in Verbindung zu setzen, daß ein Ventilkörper (58) in dem letzteren Kanal (56) gelagert ist und elastisch in dichter Anlage gegen einen Ventilsitz (60) vorgespannt wird, der am Differentialkolben (52) vorgesehen ist, und daß eine elastische Rückholvorrichtung (66) auf den Differentialkolben (52) einwirkt, um diesen in einer Richtung der Druckkammer (20) in eine bezüglich des Betätigungskolbens (16) festgelegte Ruhestellung zu verschieben, in welcher Ruhestellung der Ventilkörper (58) durch Anlage an einem Anschalg (64) von seinem Ventilsitz (60) abgehoben ist.

5. Radzylinder nach Anspruch 4, dadurch gekennzeichnet, daß der Anschalg (64) bezüglich des Betätigungskolbens (16) festgelegt ist.

6. Radzylinder nach Anspruch 4 oder 5, dadurch gekennzeichnet, daß die elastische Rückholvorrichtung (66) von einer Feder gebildet wird, die am Boden der Sackbohrung (34) anliegt.

7. Radzylinder nach einem der Ansprüche 1 bis 6, dadurch gekennzeichnet, daß der Betätigungskolben (16) einen weiteren Kanal (71) aufweist, der dazu dient, den ersten Abschnitt (30) mit der Druckkammer (20) zu verbinden, daß ein normalerweise geschlossenes Ablaßventil (70) in dem anderen Kanal (71) angeordnet ist, um die Strömungsverbindung zwischen der Ringnut (32) und der Druckkammer (20) herzustellen, wenn der Druckunterschied, der in der Ringnut (32) und in der Druckkammer (20) herrscht, einen vorgegebenen Wert überschreitet.

8. Radzylinder nach einem der vorhergehenden Ansprüche, dadurch gekennzeichnet, daß er einen zweiten Betätigungskolben (18) aufweist, der im anderen Ende der Bohrung (14) abgedichtet gleitend gelagert ist, um die Druckkammer (20) zu schließen und um eine zweite Bremsbacke (24) der Trommelbremse zu betätigen.


**Claims**

1. A wheel cylinder comprising a body (12), in the interior of which a bore (14) is formed, with at least on actuating piston (16) being slidably mounted in the bore at one end thereof and bounding a pressure chamber (20) with the latter, said actuating piston (16) being adapted to be movable towards the exterior of the bore for urging a first shoe (22) of a drum brake, said cylinder comprising a supply passage (30, 32, 34, 36) for supplying said pressure chamber (20) with fluid under pressure from a source of pressure fluid, a valve (50) adapted to modulate the pressure in the pressure chamber (20) according to the pressure supplied by the pressure source being incorporated in the wheel cylinder, characterized in that the supply passage (30, 32. 34, 36) comprises a portion (32, 34, 36) constituted by an annular groove (32) of the actuating piston (16) adapted to receive fluid under pressure from the pressure source, a blind axial bore (34) being defined in the actuating piston, said blind bore (34) being in communication with the annular groove (32) and opening towards the pressure chamber (20), said valve (50) being of the differential piston type and being disposed in the blind bore (34) of the actuating piston (16), the valve (50) occupying, for an inlet pressure below a predetermined value, an opening position allowing a pressure increase in the pressure chamber (20) equal to the increase of the inlet pressure; and the valve (50) for an inlet pressure above said predetermined value, performing a succession of opening and closing movements allowing only a pressure increase in the pressure chamber (20) smaller than the increase of the inlet pressure, according to the ratio of the effective surfaces of the differential piston (52).

2. Wheel cylinder according to claim 1, characterized in that said valve (50) is constituted by a braking compensator.

3. Wheel cylinder according to claim 1 or 2, characterized in that said supply passage (30, 32, 34, 36) comprises a passage (30) provided in the body (12) and communicating with said annular groove (32).

4. Wheel cylinder according to any of claims 1—3, characterized in that the axial bore (34) is stepped, with a large diameter portion (38) opening in the pressure chamber (20), said valve (50) comprising a differential piston (52) mounted within the stepped bore (34) to separate the latter from the pressure chamber (20), the differential piston (52) having a large diameter face adjacent the pressure chamber (20) and a small diameter face subjected to the fluid pressure prevailing in the inlet opening (30), said differential piston (52) being traversed by a passage (56) adapted to communicate the stepped bore (34) with the pressure chamber (20), a valve member (58) being mounted within said last named passage (56) and being resiliently urged in sealed abutment against a seat (60) provided on the differential piston (52), and a resilient return device (66) acting upon the differential piston (52) for displacing the latter towards the interior of the pressure chamber (20) to a fixed rest position, with respect to the actuating piston (16), in which position said valve (58) is displaced away from its seat (60) by engagement with a stop (64).

5. Wheel cylinder according to claim 4, characterized in that said stop is fixed with respect to the actuating piston (16).

6. Wheel cylinder according to claim 4 or 5, characterized in that the resilient return device (66) is constituted by a spring abutting the bottom of the blind bore (34).

7. Wheel cylinder according to any of claims 1 to 6, characterized in that the actuating piston (16) comprises another passage (71) for communicating the first portion (30) with the pressure chamber (20), a normally closed discharge valve (70) being mounted within said other passage (71) for establishing communication of fluid between the annular groove (32) and the pressure chamber (20), when the difference between the pressures prevailing in said annular groove (32) and said pressure chamber (20) exceeds a predetermined value.

8. Wheel cylinder according to any of the preceding claims, characterized in that it comprises a second actuating piston (18) slidably mounted in a seal-tight manner at the other end of the bore (14) for closing the pressure chamber (20) and for urging a second brake shoe (24) of the drum brake.

FIG.1

FIG_2